# EUROPÄISCHE PATENTANMELDUNG

(11) **EP 3 109 420 A1**
(43) Veröffentlichungstag der Anmeldung: **28.12.2016**
(21) Anmeldenummer: 15173786.3
(22) Anmeldetag: 25.06.2015
(51) Int. Cl.: F01K 13/02, F01D 25/12

(54) **VERFAHREN ZUM ABKÜHLEN EINER STRÖMUNGSMASCHINE**

(71) Anmelder: Siemens Aktiengesellschaft, 80333 München (DE)
(72) Erfinder: Stawarski, Oliver, 41462 Neuss (DE)

(57) **Zusammenfassung**

Die Erfindung betrifft ein Verfahren zum Abkühlen einer Dampfturbine (2), wobei über eine Entwässerungseinrichtung an einem Ventil zunächst Umgebungsluft mittels einer Evakuierungseinrichtung (23) durch eine Dampfturbine (2) strömt und sobald ein Deckel (36) abgekühlt ist, eine weitere Öffnung über eine Deckelentnahme geschaffen wird, durch die das Kühlmittel zusätzlich durch das Ventil strömt und dadurch die Kühlmittelmenge erhöht, wodurch ein schnelleres Abkühlen möglich ist.

## Beschreibung

Die Erfindung betrifft ein Verfahren zum Abkühlen einer Strömungsmaschine, insbesondere Dampfturbine, wobei die Strömungsmaschine einen Einlass und einen Auslass aufweist, wobei der Auslass mit einer Evakuierungseinheit strömungstechnisch verbunden wird, wobei der Einlass mit einer Lufteinrichtung zum Zuführen von Kühlmittel strömungstechnisch verbunden wird, wobei die Evakuierungseinrichtung derart ausgebildet wird, dass das Kühlmittel mit einer Kühlmitteldurchflussmenge durch die Strömungsmaschine strömt.

Strömungsmaschinen, wie z.B. Dampfturbinen sind hohen thermischen Beanspruchungen ausgesetzt. Dampfturbinen werden in der Regel über einen Einlass mit einem Dampf mit vergleichsweise hoher thermischer Energie durchströmt. Im Dauerbetrieb weisen die Temperaturen der Dampfturbinenbauteile wie z.B. das Gehäuse eine hohe und konstante Temperatur auf. Generell muss beim Betrieb von Strömungsmaschinen darauf geachtet werden, dass die Temperaturänderung pro Zeit gewisse Grenzwerte nicht überschreitet, damit die Bauteil-Lebensdauer nicht übermäßig reduziert wird. Zu Revisionszwecken ist es erforderlich, dass die Dampfturbinen vollständig abgekühlt sind. Dampfturbinen sind nach dem Abstellen allerdings immer noch auf Betriebstemperatur und kühlen aufgrund der Wärmedämmung vergleichsweise langsam aus. Eine Möglichkeit das Auskühlen zu beschleunigen, besteht darin, die Dampfturbine nach einer Beendigung des Leistungsbetriebes mit Umgebungsluft zu durchströmen, wobei mit einer Evakuierungseinheit ein Unterdruck im Turbinenkondensator erzeugt wird, der zu einer erzwungenen Strömung der Umgebungsluft durch die Dampfturbine führt. Die Strömung der Umgebungsluft durch die Dampfturbine erfolgt mit einer bestimmten Durchflussmenge, wobei darauf zu achten ist, dass die Durchflussmenge derart gewählt wird, dass zulässige Abkühlraten nicht überschritten werden. Dazu wird die Durchflussmenge durch manuelles Verstellen von Absperrarmaturen der zulässigen Abkühlrate angepasst. Dies erfolgt während des gesamten Abkühlzeitraums. Nachteilig ist hierbei, dass eine durchgehende Besetzung der Warte erforderlich ist. Außerdem muss das Bedienpersonal darüber hinaus überwachen, dass während des Abkühlens keine anormalen Betriebszustände eintreten.

Die Abkühlung mit dem Kühlmittel, erfolgt dadurch, dass am Ventilgehäuse ein Deckel abgeschraubt wird, durch den schließlich das Kühlmittel in das Dampfventil strömt und die Dampfturbine abkühlt. Allerdings kann dieser Deckel nach dem Abschalten Temperaturen zwischen 300°C bis 500°C aufweisen, was vergleichsweise hoch ist und dazu führt, dass die Handhabung erschwert wird.

Aufgabe der Erfindung ist es daher, eine Möglichkeit zu schaffen, das Abkühlen einer Dampfturbine zu beschleunigen.

Gelöst wird diese Aufgabe durch ein Verfahren gemäß Anspruch 1.

Die Erfindung geht somit vom Aspekt aus, dass, nach wie vor, über das Dampfventil, das einen Deckel aufweist, durch den das Kühlmittel durch die Dampfturbine strömt, abgekühlt wird. Zusätzlich zu dieser Kühlung wird erfindungsgemäß vorgeschlagen, eine Entwässerungseinrichtung, die am Dampfventil angeordnet ist, derart auszubilden, dass das Kühlmittel über die Entwässerungseinrichtung in den Einlass strömen kann.

Somit werden zwei Strömungswege benutzt, um die Dampfturbine abzukühlen. Das erhöht insgesamt die verfügbare Kühlmittelmenge und führt zu einem schnelleren Abkühlen.

In den Unteransprüchen sind vorteilhafte Weiterbildungen angegeben.

In einer besonders vorteilhaften Weiterbildung wird zuerst über die Entwässerungseinrichtung und anschließend über die Öffnung am Ventil das Kühlmittel in den Einlass beströmt.

Hier wird der Gedanke verfolgt, zunächst über die Entwässerungseinrichtung zu kühlen, da der abzuschraubende Deckel, nach wie vor, noch vergleichsweise hohe Temperaturen zwischen 500°C bis 600°C aufweist. Nach dieser Vorkühlung über die Entwässerungseinrichtung kühlt der Deckel schneller ab, was zu einer besseren Handhabung des Deckels führt. Nachdem der Deckel abgenommen wurde, wird durch das Dampfventil weiterer Kühlmittel zugeführt, so dass insgesamt eine schnellere Abkühlung möglich ist.

In einer weiteren vorteilhaften Weiterbildung wird erst der Deckel geöffnet, wenn die Temperatur T des Deckels ≤ an der Grenztemperatur ist, wobei hier T_{Grenz} gilt 40°C ≤ T_{Grenz} < 60°C. Erst danach wird auch über die Öffnung das Kühlmittel in den Einlass beströmt.

In einer vorteilhaften Weiterbildung wird als Kühlmittel Luft verwendet, insbesondere Umgebungsluft. Das bedeutet, dass ohnehin die in der Umgebung der Dampfturbine verfügbare Umgebungsluft als Kühlmittel verwendet wird, was zu einer kostengünstigen Variante führt.

Die oben beschriebenen Eigenschaften, Merkmale und Vorteile dieser Erfindung sowie die Art und Weise, wie diese erreicht werden, werden klarer und deutlicher Verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Dies soll die Ausführungsbeispiele nicht maßgeblich darstellen, vielmehr ist die Zeichnung, zur Erläuterung dienlich, in schematisierter und/oder leicht verzerrter Form ausgeführt. Im Hinblick auf Ergänzungen der in der Zeichnung unmittelbar erkennbaren Lehren, wird auf den einschlägigen Stand der Technik verwiesen.

Es zeigen:
- Figur 1: eine schematisch Übersicht einer Kraftwerksanlage
- Figur 2: eine perspektivische Ansicht eines Dampfventils.

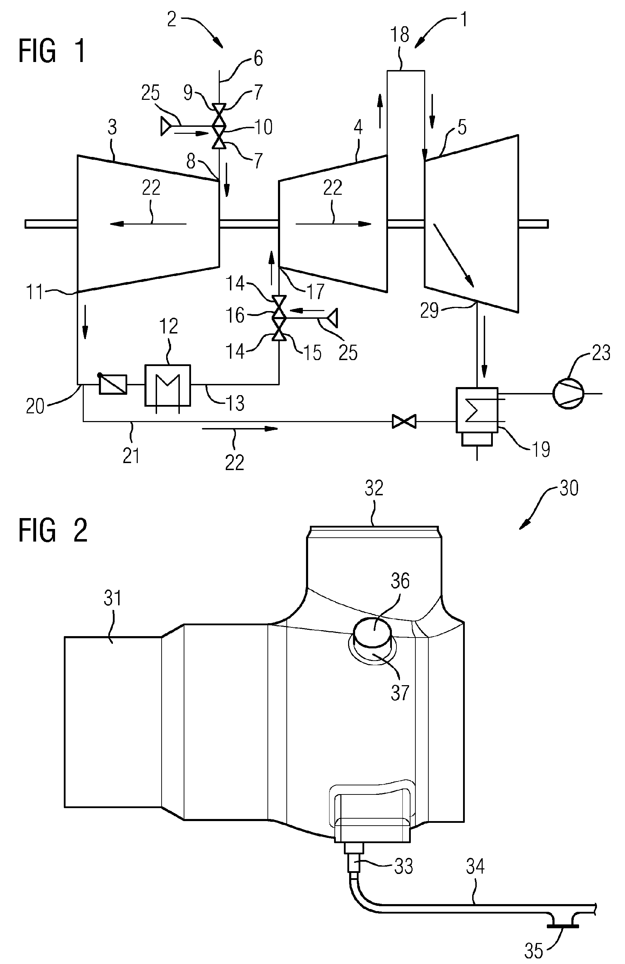

Figur 1 zeigt eine schematische Darstellung einer Kraftwerksanlage 1 umfassend eine als Dampfturbine 2 ausgebildete Strömungsmaschine, wobei die Dampfturbine eine Hochdruck-Teilturbine 3, eine Mitteldruck Teilturbine 4 und eine Niederdruck-Teilturbine 5 umfasst. Ein Frischdampf strömt aus einem nicht näher dargestellten Dampferzeuger über eine Frischdampfleitung 6 über eine Absperrarmatur 7 in einen Einlass 8 der Hochdruck-Teilturbine 3. Die Absperrarmatur 7 ist im Ausführungsbeispiel als ein Stellventil 9 und ein Schnellschussventil 10 ausgebildet. Das Stellventil 9 und das Schnellschlussventil 10 kann in Strömungsrichtung auch anders herum angeordnet werden.

In der Hochdruck-Teilturbine 3 entspannt sich der Frischdampf, der eine hohe thermische Energie aufweist. Diese hohe thermische Energie wird in Rotationsenergie eines nicht näher dargestellten Rotors umgewandelt. Dabei kühlt der Frischdampf auf eine niedrigere Temperatur, wobei sich ein niedriger Druck einstellt und strömt über einen Auslass 11 zu einem Zwischenüberhitzer 12, wobei im Zwischenüberhitzer 12 der Dampf wieder auf eine höhere Temperatur erhitzt wird. Der so erhitzte Dampf wird über eine heiße Zwischenüberhitzerleitung 13 über eine Mitteldruck-Absperrarmatur 14 zur Mitteldruck-Teilturbine 4 geführt. Die Mitteldruck-Absperrarmatur 14 ist als ein Mitteldruck-Stellventil 15 und ein Mitteldruck-Schnellschlussventil 16 ausgebildet. Die Reihenfolge in Strömungsrichtung des Mitteldruck-Stellventils 15 und des Mitteldruck-Schnellschlussventils 10 kann auch anders herum sein. Der Dampf strömt über einen Mitteldruck-Einlass 17 zur Mitteldruck-Teilturbine 4. Der Dampf aus der Mitteldruck-Teilturbine 4 strömt über eine Überströmleitung 18 zu einem Einlass der Niederdruck-Teilturbine 5 zum Kondensator 19. Im Kondensator 19 kondensiert der Dampf zu Wasser und wird über eine nicht näher dargestellte Leitung wieder zum Dampferzeuger geführt.

Die Kraftwerksanlage 1 umfasst ferner eine Abzweigung 20. An dieser Abzweigung 20 ist eine Bypassleitung 21 angeordnet, die eine strömungstechnische Verbindung zwischen dem Auslass 11 der Hochdruck-Teilturbine 3 und dem Kondensator 19 herstellt.

Die Kraftwerksanlage 1 ist ferner mit einer Evakuierungseinheit 23 ausgebildet, wobei die Evakuierungseinheit 23 mit dem Auslass 11 und einem Auslass 24 der Niederdruck-Teilturbine 5 strömungstechnisch verbunden ist. Die Evakuierungseinheit 23 ist derart ausgebildet, dass ein Unterdruck im Kondensator 19 herrscht, so dass ein in der Dampfturbine 2 befindliches Kühlmittel in Pfeilrichtung 22 zum Kondensator 19 gelangt. Das Kühlmittel, insbesondere Umgebungsluft, gelangt über eine Kühlmittelleitung 25 in die Absperrarmatur 7 bzw. Mitteldruck-Absperrarmatur 14 und führt somit zu einer Zwangsabkühlung mittels Umgebungsluft über die Kühlmittelleitung 25 und den Absperrarmaturen 7 und 14 und dem Einlass 8 sowie 17 durch die Hochdruck-Teilturbine 3 und Mitteldruck-Teilturbine 4.

Die Evakuierungseinrichtung 23 ist derart ausgebildet, dass das Kühlmittel mit einer Kühlmitteldurchflussmenge durch die Dampfturbine 2 strömt.

Die Kraftwerksanlage 1 ist ferner mit einem Automatisierungssystem (nicht dargestellt) ausgebildet, das zunächst zulässige Abkühlraten der Dampfturbine 2 ermittelt. Die zulässigen Abkühlraten können durch eine Finite-Elemente-Methode berechnet, empirisch ermittelt oder durch Tests ermittelt werden. Ferner wird mit dem Automatisierungssystem die tatsächliche Abkühlrate der Dampfturbine 2 erfasst. Dies erfolgt durch eine Messung, aus einer Mittelung mit Vergleichsdaten oder per Prognose.

In einem nächsten Schritt vergleicht das Automatisierungssystem die zulässige Abkühlrate mit der tatsächlichen Abkühlrate und regelt die Kühlmitteldurchflussmenge durch die Kühlmittelleitung 25.

Diese Regelung kann durch die Hubeinstellung in der Absperrarmatur 7 als auch mit der Mitteldruck-Absperrarmatur 14 erfolgen. Ist die Abkühlrate langsamer als zulässig, wird die Absperrarmatur 7, 14 etwas weiter geöffnet. Ist die Abkühlrate schneller als zulässig, wird die Absperrarmatur 7, 14 etwas weiter geschlossen.

Figur 2 zeigt eine perspektivische Ansicht des Dampfventils 30. Das Dampfventil 30 umfasst einen Dampfeinlass 31 durch den ein Dampf einströmt. Der Dampf strömt durch das Dampfventil 30 zum Dampfauslass 32. Die Dampfdurchflussmenge wird durch einen Ventilkegel geregelt (nicht dargestellt). In einem geodätisch unten liegenden Bereich des Dampfventils 30 ist ein Entwässerungsstutzen 33 angeordnet. Der Entwässerungsstutzen 33 ist mit einer Entwässerungsleitung 34 strömungstechnisch verbunden. In der Entwässerungsleitung 34 ist ein Stutzen 35 durch den ein Kühlmittel, insbesondere Luft, ganz insbesondere Umgebungsluft, eingeströmt werden kann und so durch das Dampfventil 30 gelangt. Durch geeignete Maßnahmen muss dafür gesorgt werden, dass der Stutzen 35 verschließbar ausgeführt wird.

Des Weiteren weist das Dampfventil 30 einen Deckel 36 auf. Dieser Deckel 36 kann vom Dampfventil 30 abgenommen werden und bietet somit einen Zugang für eine Lufteinrichtung zum Zuführen von Kühlmittel. Im Betrieb sind diese Deckel ca. 500°C bis 600°C warm.

Das Abkühlen der Strömungsmaschine erfolgt folgendermaßen: zunächst wird über den Stutzen 35 eine strömungstechnische Verbindung zwischen der Entwässerungsleitung 34 und der Umgebungsluft hergestellt. Andererseits wird über die Evakuierungseinheit 23 eine strömungstechnische Verbindung zwischen der Evakuierungseinheit und dem Stutzen 35 geschaffen. Zum Abkühlen wird ein Unterdruck über die Evakuierungseinheit 23 im Kondensator 19 hergestellt, so dass kalte Umgebungsluft über den Stutzen 35 in die Entwässerungsleitung 34 und schließlich in das Dampfventil 30 strömt. Von dort aus strömt das Kühlmittel durch die Dampfturbine und kühlt dadurch die Dampfturbine 2 ab. Die Temperatur des Deckels 36 wird dadurch verringert. Auf einer gewissen Grenztemperatur T_{Grenz} das zwischen 40°C und 60°C liegt, wird dann zusätzlich der Deckel 36 geöffnet und eine weitere Möglichkeit geschaffen, Kühlmittel, insbesondere Umgebungsluft über die Deckelöffnung 37 in die Dampfturbine 2 zu beströmen.

In einem Einzelfall wird der Deckel 36 bereits gleichzeitig mit der Entwässerungsöffnung 35 geöffnet, so dass der Deckel 36 noch nicht abgekühlt ist, aber eine hohe Kühlluftmenge durch mehrere Öffnungen genutzt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Abkühlen einer Strömungsmaschine, insbesondere Dampfturbine (2),
wobei die Strömungsmaschine einen Einlass (8, 17) und einen Auslass (11) aufweist, wobei der Auslass (11) mit einer Evakuierungseinheit (23) strömungstechnisch verbunden wird, wobei der Einlass (8, 17) mit einer Lufteinrichtung zum Zuführen von Kühlmittel strömungstechnisch verbunden wird, wobei die Evakuierungseinheit (23) derart ausgebildet wird, dass das Kühlmittel mit einer Kühlmitteldurchflussmenge durch die Strömungsmaschine strömt, wobei die Lufteinrichtung als ein Dampfventil (7, 14, 15, 16) ausgebildet wird, wobei das Dampfventil (7, 14, 15, 16) derart ausgebildet wird, dass das durch ein mit einem Deckel (36) verschließbare Öffnung das Kühlmittel zugeführt wird, wobei das Dampfventil (7, 14, 15, 16) eine Entwässerungseinrichtung (34) aufweist, die derart ausgebildet wird, dass das Kühlmittel über die Entwässerungseinrichtung (34) in den Einlass (8, 17) strömen kann.

2. Verfahren nach Anspruch 1,
wobei zuerst über die Entwässerungseinrichtung (34) und anschließend über die Öffnung das Kühlmittel in den Einlass (8, 17) strömt.

3. Verfahren nach Anspruch 2,
wobei für eine Abkühlzeit zuerst über die Entwässerungseinrichtung (34) das Kühlmittel in den Einlass (8, 17) strömt und sobald die Temperatur des Deckels (36) auf eine Temperatur T ≤ _{TGRENZ,} wobei für T_{Grenz} gilt: 40°C < T_{Grenz} < 60°C abgekühlt ist, auch über die Deckelöffnung (37) das Kühlmittel in den Einlass (8, 17) strömt.

4. Verfahren nach einem der vorhergehenden Ansprüche,
wobei als Kühlmittel Luft, insbesondere Umgebungsluft verwendet wird.
